# EUROPÄISCHE PATENTSCHRIFT

(11) **EP 2 202 542 B1**
(45) Veröffentlichungstag und Bekanntmachung des Hinweises auf die Patenterteilung: **20.04.2011**
(21) Anmeldenummer: 08022432.2
(22) Anmeldetag: 23.12.2008
(51) Int. Cl.: G01V 8/20

(54) **Lichtgitter**
Light grid
Barrière lumineuse

(43) Veröffentlichungstag der Anmeldung: 30.06.2010
(73) Patentinhaber: SICK AG, 79183 Waldkirch/Breisgau (DE)
(72) Erfinder: Blöhbaum, Frank, 79112 Freiburg (DE)
(74) Vertreter: Manitz, Finsterwald & Partner GbR

(56) Entgegenhaltungen:
- EP-A- 0 962 788
- EP-A- 1 903 356

## Beschreibung

Die Erfindung betrifft ein Lichtgitter mit optoelektronischen Empfangselementen, den Empfangselementen zugeordneten Empfangsschaltungen zur differenziellen Verstärkung der Empfangssignale, einem Leitungsbus mit zwei Leitungen und einem zwei Eingänge aufweisenden, über den Leitungsbus mit den Empfangsschaltungen verbundenen Nachverstärker zur Erzeugung eines Ausgangssignals.

Aus der EP-A-1 903 356 ist bereits ein Lichtgitter mit mehreren Empfangselementen bekannt; die über einen gemeinsamen Adress- und Datenbus oder einen kombinierten Adress- /Datenbus miteinander verbunden sind. Ausgehend von einer Auswerteeinheit können die Empfangselemente wahlfrei angesteuert und ausgewertet werden.

Auch in der EP-A-0 962 788 ist bereits ein Lichtgitter mit mehreren Empfangselementen beschrieben, denen eine Empfangsschaltung zugeordnet ist, die eine selektive, synchronisierte Ansteuerung der einzelnen Empfangselemente ermöglicht.

In der Praxis wird eine Vielzahl von Lichtgittern mit einer unterschiedlichen Anzahl von Lichtstrahlen, typischerweise 3 bis 200, eingesetzt. Die in der Regel gleichartig aufgebauten Empfänger sind ausgangsseitig parallel geschaltet und werden einzeln, in der Regel nacheinander, aktiviert. Entsprechend ergibt sich ein je nach Anzahl der Empfänger in seiner Länge variierender so genannter analoger Leitungsbus, der zwei Leitungen umfasst, die in der Praxis mit "Ap" bzw. "An" bezeichnet werden (A = analog, p = positiv, n = negativ). Die insbesondere als integrierte Schaltungen ausgeführten Empfänger bzw. Empfangs-ICs umfassen typischerweise eine Empfangsfotodiode, einen Bandpass und einen nachgeschalteten, der Verstärkung des differenziellen Empfangssignals dienenden Differenzverstärker mit einer Stromquelle und zwei Transistoren, deren Kollektor- oder Drain-Anschlüsse gewöhnlich mit "Ap" bzw. "An" bezeichnet sind. Üblicherweise enthält ein jeweiliges Lichtgitter zumindest drei solche, endseitig parallel geschaltete Empfänger, deren sämtliche Anschlüsse "Ap" und sämtliche Anschlüsse "An" jeweils zusammengeschaltet werden. In einem jeweiligen Lichtgitter liegt also eine Vielzahl solcher Empfänger vor, deren Ap- und An-Ausgänge parallel geschaltet sind. Dabei ist beispielsweise ein solches Timing der Empfänger denkbar, dass die jeweiligen Stromquellen der Differenzverstärker nacheinander aktiv geschaltet werden, wodurch auch bei einer Vielzahl von ausgangsseitig parallel geschalteten Empfängern jeweils nur ein Empfängerbaustein aktiv ist. Es ist beispielsweise jedoch auch denkbar, dass jeder x-te, zum Beispiel jeder zehnte Empfänger aktiv geschaltet wird.

In der Praxis werden eine möglichst einfache Signalstruktur vom Sender und eine Synchronisierung der Empfänger auf den Sender ohne direkte Kabelverbindung angestrebt. Zu beachten ist vor allem, dass für ein jeweiliges Lichtgitter insgesamt jeweils ein enges Zeitfenster von typischerweise 10 ms zur Verfügung steht, das heißt die entsprechende Anzahl von Strahlen, typischerweise bis zu 200, innerhalb des engen Zeitfensters vollständig verarbeitet werden müssen.

Die Herstellungskosten von Lichtgittern sollen fortlaufend reduziert werden, was kleinere Empfangsoptiken mit sich bringt. Es werden intelligentere Signalverarbeitungsverfahren benötigt, was die Verarbeitung einer höheren Anzahl von Lichtpulsen pro Zeiteinheit und entsprechend eine höhere Frequenz mit sich bringt. Die Bereitstellung solcher intelligenterer Signalverarbeitungsverfahren scheitert derzeit jedoch unter anderem an den parasitären Kapazitäten der Vielzahl von parallel geschalteten Empfängern bzw. Empfangs-ICs. Dabei handelt es sich im Wesentlichen um Leitungskapazitäten des analogen Busses Ap, An. Die Länge dieses analogen Busses nimmt mit der Anzahl von Lichtstrahlen bzw. Empfängern zu. So ist die Leitung bei beispielsweise 200 Lichtstrahlen erheblich länger als beispielsweise bei lediglich 3 Lichtstrahlen.

Bisher erfolgte zur Verarbeitung des differenziell verstärkten Empfangssignals stets eine Spannungsauswertung, bei der beispielsweise die von einem jeweiligen Differenzverstärker gelieferten Ströme jeweils über einen Widerstand geführt wurden, um an diesem eine jeweilige Ausgangsspannung zu erhalten und die Weiterverarbeitung auf der Basis der sich ergebenden Differenzspannung vorzunehmen. Die jeweilige Spannungsdifferenz führte entsprechend zu einem Auf- oder Entladen der parasitären Kapazität zwischen den beiden Leitungen des analogen Leitungsbusses.

Da an den Knoten Ap und An eine unterschiedliche Anzahl von Empfängern, zum Beispiel zwischen 3 und 200 Empfangs-ICs, parallel geschaltet sein kann, ergibt sich eine von Lichtgitter zu Lichtgitter stark variierende Länge des analogen Leitungsbusses. Entsprechend stark variiert die zwischen den beiden Leitungen Ap und An dieses Leitungsbusses auftretende parasitäre Kapazität, die typischerweise in einem Bereich von 12 pF für einen Strahl bis zu 2,4 nF für 200 Strahlen liegen kann. Bei einer ungünstigen Leitungsführung kann eine noch deutlich höhere parasitäre Kapazität auftreten.

Es wäre nun zwar denkbar, die jeweilige parasitäre Kapazität zwischen den beiden Leitungen des analogen Leitungsbusses abzugleichen oder zu messen. Eine Lösungsmöglichkeit bestünde darin, die parasitäre Kapazität durch einen externen Kondensator zu kompensieren. Dann wäre für jedes Lichtgitter entsprechend der jeweiligen Anzahl von Lichtstrahlen ein spezieller Kondensator erforderlich. Bei typischerweise bis zu 200 Strahlen würde dies 200 unterschiedliche Kondensatoren bedeuten, was mit einem sehr großen Produktionsaufwand verbunden wäre.

Da bei den bisher üblichen Lichtgittern an den Anschlüssen Ap und An eine Spannung erzeugt wird, ergibt sich mit der stark variierenden Kapazität zwischen den beiden Leitungen des analogen Leitungsbusses eine unterschiedlich lange Zeitdauer des Umladens, zumal der aus den Knoten Ap und An herausfließende Strom sehr stark begrenzt ist. So liegt hier keine Spannungsquelle mit unendlich geringem Innenwiderstand vor. Der Strom wird vielmehr durch die Stromquelle am Fußpunkt des Differenzverstärkers eines jeweiligen Empfängers bzw. Empfangs-ICs bestimmt. Je größer die parasitäre Kapazität ist, umso länger braucht man für ein jeweiliges Umladen, und irgendwann ist so viel Zeit vergangen, dass der Puls nicht mehr erkannt wird.

Der Erfindung liegt die Aufgabe zugrunde, ein verbessertes Lichtgitter der eingangs genannten Art zu schaffen, mit dem auf möglichst einfache und zuverlässige Art und Weise sichergestellt ist, dass die jeweilige parasitäre Kapazität keine Auswirkungen auf die Signalverarbeitung hat.

Diese Aufgabe wird erfindungsgemäß dadurch gelöst, dass der Nachverstärker so ausgeführt ist, dass er ein zur Differenz der aus den beiden Busleitungen in die beiden Nachverstärkereingänge fließenden Ströme proportionales Ausgangssignal erzeugt und die beiden jeweils mit einer Leitung des Leitungsbusses verbundenen Nachverstärkereingänge konstant auf einem gleichen vorgegebenen Potenzial hält.

Aufgrund dieser Ausbildung wird auf einfache und zuverlässige Art und Weise erreicht, dass die jeweilige parasitäre Kapazität zwischen den beiden Leitungen des Leitungsbusses praktisch nicht mehr zum Tragen kommt. Durch die erfindungsgemäße Ausgestaltung des Nachverstärkers ergibt sich ein Implementierungsverstärker mit automatischer Kompensation der parasitären Kapazität, der nicht im Spannungsbereich, sondern im Strombereich arbeitet. Da die jeweilige parasitäre Kapazität praktisch nicht mehr zum Tragen kommt, ergibt sich auch eine wesentlich höhere Grenzfrequenz, was den Einsatz preisgünstigerer Bauteile sowie eine hohe Bandbreite der ganzen Anordnung ermöglicht. Mit einer äußerst einfachen Anordnung wird die Funktionalität eines Implementierungsverstärkers erzielt.

Es können nunmehr kürzere Pulse mit einer höheren Eckfrequenz in kürzeren Zeitabständen übertragen werden.

Vorteilhafterweise umfasst der Nachverstärker einen das Ausgangssignal liefernden Operationsverstärker.

Der Nachverstärker kann beispielsweise ein unipolares Ausgangssignal aus einem differenziell verstärkten Eingangssignal erzeugen. Wird alternativ für die Weiterverarbeitung ein differenzielles Ausgangssignal gewünscht, kann dies in einfacher Weise insbesondere durch die Verwendung eines Operationsverstärkers mit differenziellem Ausgang erreicht werden.

Als Operationsverstärker kann insbesondere ein Transimpedanzverstärker oder stromrückgekoppelter Operationsverstärker vorgesehen sein.

Eine bevorzugte praktische Ausführungsform des erfindungsgemäßen Lichtgitters zeichnet sich dadurch aus, dass ein mit einer ersten der beiden Busleitungen verbundener erster Eingang der beiden Nachverstärkereingänge über eine erste Transistorschaltung und der nicht invertierende Eingang des Operationsverstärkers über eine zweite Transistorschaltung konstant auf einem zumindest im Wesentlichen gleichen vorgegebenen Spannungspotenzial gehalten werden, auf das das Spannungspotenzial an dem mit der zweiten Busleitung verbundenen zweiten Nachverstärkereingang ausgeregelt wird. Dabei ist zweckmäßigerweise der zweite Nachverstärkereingang mit dem invertierenden Eingang des Operationsverstärkers verbunden, wobei dieser invertierende Eingang über ein Gegenkopplungsnetzwerk mit dem Ausgang des Operationsverstärkers verbunden ist.

Vorteilhafterweise umfasst der Nachverstärker einen Stromspiegel.

Dabei ist bevorzugt die erste Transistorschaltung mit einem ersten Stromzweig des Stromspiegels in Reihe geschaltet, während mit dessen zweitem Stromzweig der zweite Nachverstärkereingang und entsprechend der invertierende Eingang des Operationsverstärkers verbunden ist.

Mittels des Stromspiegels kann der aus der ersten Busleitung in den ersten Nachverstärkereingang fließende Strom gespiegelt werden, wobei der gespiegelte Strom in dem mit dem zweiten Nachverstärkereingang und entsprechend der zweiten Busleitung sowie dem invertierenden Eingang des Operationsverstärkers verbundenen zweiten Stromzweig des Stromspiegels auftritt. Während das Spannungspotenzial am ersten Nachverstärkereingang beispielsweise über die erste Transistorschaltung festgelegt ist und dasselbe Spannungspotenzial auch am nicht invertierenden Eingang des Operationsverstärkers anliegt, ist das Spannungspotenzial des mit dem zweiten Stromzweig des Stromspiegels verbundenen zweiten Nachverstärkereingangs zunächst unbestimmt. Über das Gegenkopplungsnetzwerk des Operationsverstärkers wird nun das an dessen invertierendem Eingang anliegende Potenzial und entsprechend das Potenzial am zweiten Nachverstärkereingang auf das Potenzial des nicht invertierenden Eingangs des Operationsverstärkers und damit auf das Potenzial des ersten Nachverstärkereingangs nachgeregelt. Dabei liefert der Operationsverstärker ein zur Differenz zwischen den in die beiden Nachverstärkereingänge fließenden Strömen proportionales Ausgangssignal. Der Stromspiegel kann in verschiedenen Varianten ausgebildet sein, z.B. in herkömmlicher Weise mit zwei Transistoren und zwei Widerständen, als Wilson-Stromspiegel oder als kaskodierter Stromspiegel.

Der Stromspiegel ist so ausgeführt, dass das Verhältnis des Betrages der Ströme in den beiden Stromzweigen vorzugsweise gleich Eins ist. Damit wird sichergestellt, dass die Ströme der Stromausgänge, die an die Knoten Ap und An angeschlossen sind, den gleichen Betrag aufweisen. Da erfindungsgemäß das Potential von Ap gleich dem von An ist, muss ein vorzeichenbehafteter Differenzstrom l_{diff} = I_{Ap} - I_{An} über das insbesondere aus einem Widerstand bestehende Gegenkopplungsnetzwerk fließen, da erfindungsgemäß der invertierende Operationsverstärkereingang hochohmig ist. Wird ein Signal empfangen, werden mit dessen Signalform die Stromausgänge des Empfänger-ICs moduliert. Dabei ist der Betrag der Stromänderung ΔI_{Ap} gleich dem Betrag der Stromänderung ΔI_{An}, wobei die Phase invertiert bzw. um 180° phasengedreht ist. Der Stromspiegel wirkt dieser Stromdifferenz entgegen und zwingt beiden Stromzweigen denselben Betrag des Stromes auf. Dadurch muss die Stromdifferenz, also die Wechselstromkomponente, idealerweise vollständig über den das Gegenkopplungsnetzwerk bildenden Widerstand fließen. Da der Operationsverstärker die Potentialdifferenz zwischen seinen beiden Eingängen auf einen sehr kleinen Restwert (= Offsetspannung) regelt, ergibt sich so am Ausgang des Operationsverstärkers eine vom Empfangssignal abhängige Wechselspannungskomponente, die dem Produkt aus der vorzeichenbehafteten Wechselstromdifferenz (ΔI_{Ap} - ΔI_{An}) multipliziert mit dem Widerstandswert des das Gegenkopplungsnetzwerk bildenden Widerstandes entspricht. Zusätzlich stellt der Operationsverstärker diese Wechselspannungskomponente mit niedriger Quellimpedanz den nachfolgenden Signalverarbeitungsstufen zur Verfügung.

In einer weiteren Ausführungsform kann der Stromspiegel auch so ausgeführt werden, dass das Verhältnis des Betrages der Ströme in den beiden Stromzweigen ungleich Eins ist und so z.B. ein Ausgangsstrom-Offset des vorgeschalteten Empfänger-ICs gezielt kompensiert werden kann. Zu diesem Zweck kann das Verhältnis des Betrages der Ströme in den beiden Stromzweigen auch einstellbar realisiert werden, z.B. durch definiertes Zu- bzw. Abschalten von einem oder mehreren Transistoren, die zu einem oder mehreren wenigstens einem der beiden Stromspiegelzweige zugeordneten Transistoren parallel geschaltet sind, und/oder durch Ändern des Widerstandswertes eines Emitterwiderstandes wenigstens einer der den beiden Stromspiegelzweigen zugeordneten Transistorschaltungen.

Von Vorteil ist insbesondere auch, wenn die erste Transistorschaltung einen Transistor umfasst, dessen Basis- oder Gate-Anschluss auf einem festen Spannungspotenzial gehalten ist und dessen Emitter- bzw. Source-Anschluss direkt mit dem ersten Nachverstärkereingang verbunden ist, um diesen konstant auf dem vorgegebenen Spannungspotenzial zu halten.

Dabei umfasst die zweite Transistorschaltung vorzugsweise einen Transistor, dessen Basis- oder Gate-Anschluss direkt mit dem Basis oder Gate-Anschluss des der ersten Transistorschaltung zugeordneten Transistors und dessen Emitter- bzw. Source-Anschluss direkt mit dem nicht invertierenden Eingang des Operationsverstärkers verbunden ist, sodass der nicht invertierende Eingang des Operationsverstärkers zumindest im Wesentlichen dasselbe vorgegebene Spannungspotenzial wie der erste Nachverstärkereingang aufweist.

Zweckmäßigerweise werden der Basis- bzw. Gate-Anschluss des Transistors der ersten Transistorschaltung und der Basis- bzw. Gate-Anschluss des Transistors der zweiten Transistorschaltung über einen gemeinsamen, zwischen die Versorgungsspannungsklemme und Masse geschalteten Spannungsteiler auf dem festen Spannungspotenzial gehalten.

Das Gegenkopplungsnetzwerk kann insbesondere aus einem ohmschen Widerstand bestehen.

Die Basis- bzw. Gate-Anschlüsse der Transistoren der beiden Transistorschaltungen können wechselspannungsmäßig entkoppelt sein. Dabei kann die wechselspannungsmäßige Entkopplung beispielsweise mittels eines Kondensators erfolgen.

Der nicht invertierende Eingang des Operationsverstärkers ist bevorzugt über einen ohmschen Widerstand mit einem definierten Potenzial, z.B. Masse, verbunden.

Mit der erfindungsgemäßen Ausgestaltung des Nachverstärkers wird ein im Strombereich arbeitender Instrumentierungsverstärker mit automatischer Kompensation der parasitären Kapazität geschaffen. Dabei ist der jeweilige Wert der parasitären Kapazität unerheblich, da auf beiden Seiten dasselbe Potenzial aufrechterhalten wird.

Dadurch, dass nicht mehr im Spannungsbereich, sondern im Strombereich gearbeitet wird, wirken sich parasitäre Kapazitäten der geschalteten Transistoren praktisch nicht mehr aus, das heißt die Grenzfrequenz der erfindungsgemäßen Schaltung ist wesentlich höher als bei einer im Spannungsbereich arbeitenden Schaltung. Damit kann mit vergleichsweise preisgünstigen Bauteilen eine hohe Bandbreite der gesamten Anordnung erzielt werden.

Zudem wird mit einer äußerst einfachen Anordnung bezüglich des Nachverstärkers die Funktionalität eines Instrumentierungsverstärkers erzielt, für die normalerweise drei Operationsverstärker erforderlich wären. So erhält man aufgrund der erfindungsgemäßen Lösung aus einem differenziell verstärkten Eingangssignal ein unipolares Ausgangssignal, das zur Weiterverarbeitung hergenommen werden kann, was bisher lediglich mit einer drei Operationsverstärker umfassenden Anordnung möglich war. Erfindungsgemäß genügt hierzu eine Schaltungsanordnung mit einem einzigen Operationsverstärker.

Die Erfindung wird im Folgenden anhand eines Ausführungsbeispiels unter Bezugnahme auf die Zeichnung näher beschrieben; in dieser zeigen:
- Fig. 1: eine schematische Darstellung einer beispielhaften Ausfüh- rungsform eines einen Sender und einen Empfänger umfas- senden Lichtgitters und
- Fig. 2: eine schematische Darstellung einer beispielhaften Ausfüh- rungsform eines dem Empfänger des Lichtgitters zugeordne- ten Nachverstärkers.

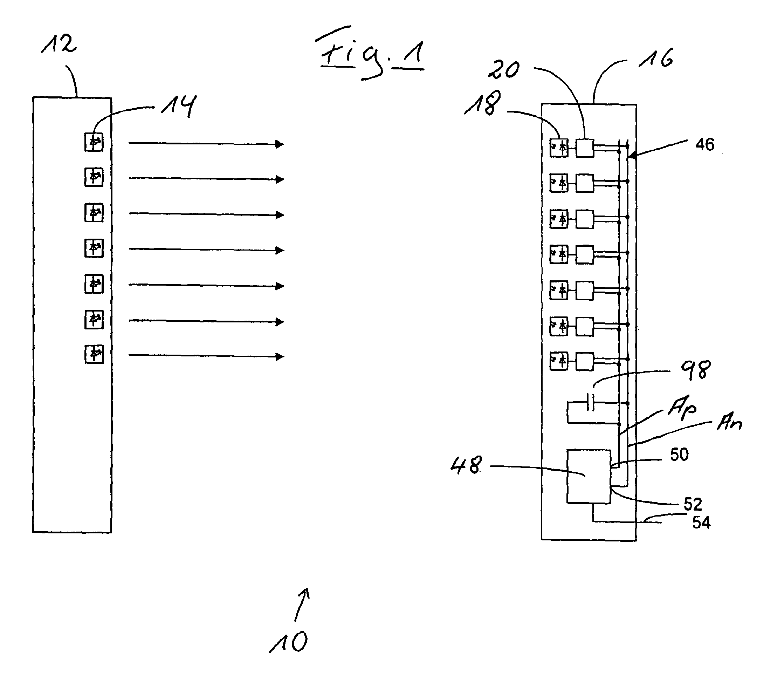

Fig. 1 zeigt in schematischer Darstellung eine beispielhafte Ausführungsform eines Lichtgitters 10 mit einem optoelektronische Sendeelemente 14 umfassenden Sender 12 und einem Empfänger 16 mit optoelektronischen Empfangselementen 18, den Empfangselementen 18 zugeordneten Empfangsschaltungen 20 zur differenziellen Verstärkung der Empfangssignale, einem analogen Leitungsbus 46 mit zwei Leitungen Ap, An (A=analog, p=positiv, n=negativ) und einem zwei Eingänge 50, 52 aufweisenden, über den Leitungsbus 46 mit den Empfangsschaltungen 20 verbundenen Nachverstärker 48 zur Erzeugung eines Ausgangssignals 54.

In dem Lichtgitter 10 werden mehrere Empfangsempfangsschaltungen 20 ausgangsseitig parallel geschaltet, wobei die Anzahl der Empfangsschaltungen 20 der Anzahl von Lichtstrahlen entspricht. Es werden also sämtliche Leitungen Ap bzw. sämtliche Leitungen An jeweils zusammen geschaltet. Typischerweise werden zumindest drei solche Empfangsschaltungen 20 parallel geschaltet. In der Praxis können beispielsweise bis zu 200 parallel geschaltete Empfangsschaltungen 20 vorgesehen sein.

Die sich zwischen den beiden Leitungen Ap, An ergebende parasitäre Kapazität ist in der Fig. 1 mit "98" bezeichnet.

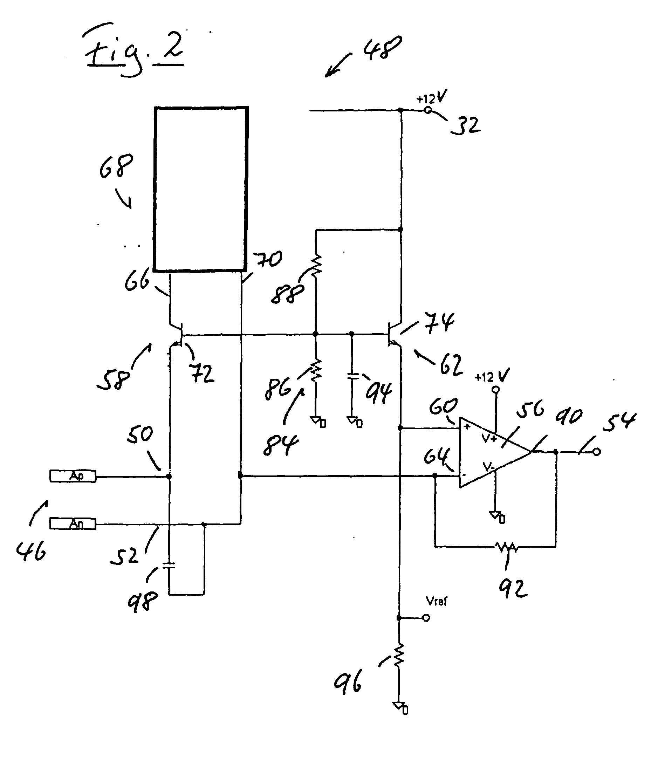

Fig. 2 zeigt in schematischer Darstellung eine beispielhafte Ausführungsform des Nachverstärkers 48.

Wie anhand der Fig. 2 zu erkennen ist, umfasst der Nachverstärker 48 zwei Eingänge 50, 52, die über den die beiden Leitungen Ap, An umfassenden Leitungsbus 46 mit den Ausgängen der Empfangsschaltungen 20 gekoppelt sind (vgl. auch Fig. 1) .

Wie der Fig. 2 entnommen werden kann, ist der Nachverstärker 48 so ausgeführt, dass er ein zur Differenz der aus den beiden Busleitungen Ap, An in die beiden Nachverstärkereingänge 50, 52 fließenden Ströme proportionales Ausgangssignal 54 erzeugt und die beiden jeweils mit einer Leitung Ap, An des Leitungsbusses 46 verbundenen Nachverstärkereingänge 50, 52 konstant auf einem gleichen vorgegebenen Potenzial hält. Dabei kann der Nachverstärker 48 insbesondere einen das Ausgangssignal 54 liefernden Operationsverstärker 56 umfassen. Der Operationsverstärker 56 kann insbesondere als Transimpedanzverstärker oder stromrückgekoppelter Operationsverstärker ausgeführt sein.

Der Nachverstärker 48 kann beispielsweise zur Erzeugung eines unipolaren Ausgangssignals 54 ausgeführt sein. Wird alternativ für die Weiterverarbeitung ein differenzielles Ausgangssignal gewünscht, kann dies in einfacher Weise durch die Verwendung eines Operationsverstärkers mit differenziellem Ausgang erreicht werden.

Wie anhand der Fig. 2 zu erkennen ist, werden beim vorliegenden Ausführungsbeispiel ein mit einer ersten Ap der beiden Busleitungen Ap, An verbundener erster Eingang 50 der beiden Nachverstärkereingänge 50, 22 über eine erste Transistorschaltung 58 und der nicht invertierende Eingang 60 des Operationsverstärkers 56 über eine zweite Transistorschaltung 62 konstant auf einem zumindest im Wesentlichen gleichen vorgegebenen Spannungspotenzial gehalten. Auf dieses insbesondere auch am ersten Nachverstärkereingang 50 vorliegende Spannungspotenzial wird das Spannungspotenzial an dem mit der zweiten Busleitung An verbundenen zweiten Nachverstärkereingang 52 ausgeregelt. Dabei ist zweckmäßigerweise der zweite Nachverstärkereingang 52 mit dem invertierenden Eingang 64 des Operationsverstärkers 56 und der invertierende Eingang 60 über ein Gegenkopplungsnetzwerk 92 mit dem Ausgang 90 des Operationsverstärkers 56 verbunden.

Der Nachverstärker 48 umfasst zweckmäßigerweise einen Stromspiegel 68.

Der Stromspiegel ist so ausgeführt, dass das Verhältnis des Betrages der Ströme in den beiden Stromzweigen vorzugsweise gleich Eins ist. Damit wird sichergestellt, dass die Ströme der Stromausgänge, die an die Knoten Ap und An angeschlossen sind, den gleichen Betrag aufweisen. Da erfindungsgemäß das Potential von Ap gleich dem von An ist, muss ein vorzeichenbehafteter Differenzstrom I_{diff} = I_{Ap} - I_{An} über das vorzugsweise aus einem Widerstand bestehende Gegenkopplungsnetzwerk fließen, da erfindungsgemäß der invertierende Operationsverstärkereingang 64 hochohmig ist. Wird ein Signal empfangen, werden mit dessen Signalform die Stromausgänge des Empfänger-ICs moduliert. Dabei ist der Betrag der Stromänderung ΔI_{Ap} gleich dem Betrag der Stromänderung Δ I_{An}, wobei die Phase invertiert bzw. um 180° phasengedreht ist. Der Stromspiegel wirkt dieser Stromdifferenz entgegen und zwingt beiden Stromzweigen den selben Betrag des Stromes auf. Dadurch muss die Stromdifferenz, also die Wechselstromkomponente, idealerweise vollständig über den Widerstand 92 fließen. Da der Operationsverstärker 56 die Potentialdifferenz zwischen seinen beiden Eingängen auf einen sehr kleinen Restwert (= Offsetspannung) regelt, ergibt sich so am Ausgang 54 des Operationsverstärkers 56 eine vom Empfangssignal abhängige Wechselspannungskomponente Uac, die dem Produkt aus der vorzeichenbehafteten Wechselstromdifferenz (ΔI_{Ap} - ΔI_{An}) multipliziert mit dem Widerstandswert des Widerstandes 92 entspricht. Zusätzlich stellt der Operationsverstärker 56 diese Wechselspannungskomponente mit niedriger Quellimpedanz den nachfolgenden Signalverarbeitungsstufen zur Verfügung.

In einer weiteren Ausführungsform kann der Stromspiegel auch so ausgeführt werden, dass das Verhältnis des Betrages der Ströme in den beiden Stromzweigen ungleich Eins ist und so z.B. ein Ausgangsstrom-Offset des vorgeschalteten Empfänger-ICs gezielt kompensiert werden kann. Zu diesem Zweck kann das Verhältnis des Betrages der Ströme in den beiden Stromzweigen auch einstellbar realisiert werden, z.B. durch definiertes Zu- bzw. Abschalten von einem oder mehreren Transistoren, die zu einem oder mehreren wenigstens einem der beiden Stromspiegelzweige zugeordneten Transistoren parallel geschaltet sind, oder durch Änderung des

Widerstandswertes eines Emitterwiderstandes wenigstens einer der den beiden Stromspiegelzweigen zugeordneten Transistorschaltungen.

Dabei kann der Stromspiegel beispeilsweise zwei Transistoren umfassen, deren Kollektor- oder Drain-Anschlüsse mit dem ersten bzw. dem zweiten Nachverstärkereingang 50 bzw. 52 und deren Emitter- bzw. Source-Anschlüsse mit der Versorgungsspannungsklemme 32 verbunden sind. Hierbei können die Emitter- bzw. Source-Anschlüsse der beiden Transistoren des Stromspiegels 68 beispielsweise jeweils über einen Emitter-Widerstand mit der Versorgungsspannungsquelle 32 verbunden sein. Das Verhältnis des Betrages der Ströme in den beiden Stromzweigen kann im vorliegenden Fall also beispielsweise durch definiertes Zu- bzw. Abschalten von zu den beiden Transistoren des Stromspiegels parallel geschalteten Transistoren und/oder durch Ändern des Widerstandswertes wenigstens eines der Emitterwiderstände einstellbar realisiert werden.

Dabei kann, wie der Fig. 2 zu entnehmen ist, die erste Transistorschaltung 58 mit einem ersten Stromzweig 66 des Stromspiegels 68 in Reihe geschaltet sein, während mit dessen zweitem Stromzweig 70 der zweite Nachverstärkereingang 52 und entsprechend der invertierende Eingang 64 des Operationsverstärkers 56 verbunden ist.

Beim vorliegenden Ausführungsbeispiel handelt es sich bei den Transistoren des Nachverstärkers 48 um bipolare Transistoren. Grundsätzlich kann jedoch zumindest ein Teil dieser Transistoren auch durch Feldeffekttransistoren gebildet sein.

Die erste Transistorschaltung 58 kann insbesondere einen Transistor 72 umfassen, dessen Basis- oder Gate-Anschluss auf einem festen Spannungspotenzial gehalten ist und dessen Emitter- bzw. Source-Anschluss direkt mit dem ersten Nachverstärkereingang verbunden ist, um diesen konstant auf dem vorgegebenen Spannungspotenzial zu halten.

Die zweite Transistorschaltung 62 kann insbesondere einen Transistor 74 umfassen, dessen Basis- oder Gate-Anschluss direkt mit dem Basis- oder Gate-Anschluss des der ersten Transistorschaltung 58 zugeordneten Transistors 72 und dessen Emitter- bzw. Source-Anschluss direkt mit dem nicht invertierenden Eingang 60 des Operationsverstärkers 56 verbunden ist, sodass der nicht invertierende Eingang 60 des Operationsverstärkers 56 zumindest im Wesentlichen dasselbe vorgegebene Spannungspotenzial wie der erste Nachverstärkereingang 50 aufweist.

Gemäß Fig. 2 können der Basis- bzw. Gate-Anschluss des Transistors 72 der ersten Transistorschaltung 58 und der Basis- bzw. Gate-Anschluss des Transistors 74 der zweiten Transistorschaltung 62 insbesondere über einen gemeinsamen, zwischen die Versorgungsspannungsklemme 32 und Masse 0 geschalteten Spannungsteiler 84 auf dem festen Spannungspotenzial gehalten werden, der hier beispielsweise die beiden Widerstände 86, 88 umfasst.

Das Gegenkopplungsnetzwerk kann insbesondere aus einem ohmschen Widerstand 92 bestehen.

Die Basis- bzw. Gate-Anschlüsse der Transistoren 72, 74 der beiden Transistorschaltungen 58, 62 können wechselspannungsmäßig entkoppelt sein. Dabei kann die wechselspannungsmäßige Entkopplung beispielsweise mittels eines Kondensators 94 erfolgen.

Der nicht invertierende Eingang 64 des Operationsverstärkers 56 kann über einen ohmschen Widerstand 96 mit einem definierten Potenzial, z.B. Masse 0, verbunden sein.

Der Stromspiegel 68 kann in verschiedenen Alternativen ausgebildet sein, z.B. in herkömmlicher Weise mit zwei Transistoren und zwei Widerständen, als Wilson-Stromspiegel oder als kaskodierter Stromspiegel.

Die Funktionsweise des in der Fig. 2 wiedergegebenen Nachverstärkers 48 1 ist wie folgt:

Der aus der Leitung Ap fließende Strom gelangt über die Kollektor-Emitter-Strecke des Transistors 72 in den ersten Stromzweig 66 des Stromspiegels 68. Dieser Strom wird gespiegelt und tritt im zweiten Stromzweig 70 des Stromspiegels 68 wieder auf. Über den Emitter des Transistors 72 wird das Spannungspotenzial am Knoten Ap bzw. dem ersten Nachverstärkereingang 50 festgelegt. Dazu wird die Spannung an der Basis des Transistors 72 über den Spannungsteiler 84 von der über eine Versorgungsspannungsklemme 32 abgreifbaren Betriebsspannung abgeleitet und auf ein festes Potenzial gelegt. Mit dem Kondensator 94 werden die Basis- bzw. Gate-Anschlüsse der Transistoren 72, 74 der beiden Transistorschaltungen 58, 62 wechselspannungsmäßig entkoppelt. Im Prinzip handelt es sich bei der ersten Transistorschaltung 58 also um eine Basisschaltung. Dasselbe trifft auch auf die zweite Transistorschaltung 62 zu, wobei das Potenzial der Basis- bzw. Gate-Anschlüsse der Transistoren 72 und 74 der beiden Transistorschaltungen 58, 62 auf demselben Potenzial liegen. Bei gleichartigen Transistoren 72, 74 sind entsprechend auch deren Emitter- bzw. Sourcepotenziale gleich. Das Potenzial am Ende der Leitung Ap bzw. am ersten Nachverstärkereingang 50 entspricht als dem Potenzial am nicht invertierenden Eingang 60 des Operationsverstärkers 56.

Mittels des Stromspiegels 68 wird der aus der ersten Busleitung Ap in den ersten Nachverstärkereingang 50 fließende Strom gespiegelt. Dabei tritt der gespiegelte Strom in dem mit dem zweiten Nachverstärkereingang 52 und entsprechend der zweiten Busleitung An sowie dem invertierenden Eingang 64 des Operationsverstärkers 56 verbundenen zweiten Stromzweig des Stromspiegels 68 auf. Während das Spannungspotenzial am ersten Nachverstärkereingang 50 über die erste Transistorschaltung 58 festgelegt ist und dasselbe Spannungspotenzial auch am nicht invertierenden Eingang 60 des Operationsverstärkers 56 anliegt, ist das Spannungspotenzial des mit dem zweiten Stromzweig 70 des Stromspiegels 68 verbundenen zweiten Nachverstärkereingangs 52 zunächst unbestimmt. Über das Rückkopplungsnetzwerk 92 des Operationsverstärkers 56 wird nun das an dessen invertierendem Eingang 64 anliegende Potenzial und entsprechend das Potenzial am zweiten Nachverstärkereingang 52 auf das Potenzial des nicht invertierenden Eingangs 60 des Operationsverstärkers 56 und damit auf das Potenzial des ersten Nachverstärkereingangs 50 nachgeregelt. Dabei liefert der Operationsverstärker 56 ein zur Differenz zwischen den in die beiden Nachverstärkereingänge 50, 52 fließenden Strömen proportionales Ausgangssignal 54.

So verstärkt der Operationsverstärker 56 mit seiner hohen Leerlaufverstärkung die zwischen seinen beiden Eingängen 60, 64 anliegende Differenzspannung. Über das Gegenkopplungsnetzwerk 92 erfolgt ein Ausregeln dieser zwischen den Eingängen vorgesehenen Differenzspannung, die bei idealem Operationsverstärker 56 am Ende den Wert Null annimmt. Über das Gegenkopplungsnetzwerk 92 wird also das am invertierenden Eingang 64 des Operationsverstärkers 56 anliegende Potenzial auf das Potenzial des nicht invertierenden Eingangs 60 nachgeregelt. Entsprechend wird das Potenzial am mit der Leitung An verbundenen zweiten Nachverstärkereingang 52 auf das Potenzial des ersten Nachverstärkereingangs 50 nachgeregelt. Die am Ausgang 90 des Operationsverstärkers 56 erzeugte, das Ausgangssignal 54 liefernde Ausgangsspannung entspricht also in dem Fall, dass das Gegenkopplungsnetzwerk beispielsweise durch einen ohmschen Widerstand 92 gebildet wird, dem Produkt aus dem Wert des ohmschen Widerstandes und der Differenz zwischen den beiden aus den Enden der Leitungen Ap, An in die Nachverstärkereingänge 50, 52 fließenden Ströme. Einerseits sind also die Potenziale am Emitter des Transistors 72 und am Emitter des Transistors 74 sowie am nicht invertierenden Eingang 60 des Operationsverstärkers 56 identisch. Zum anderen wird durch den Operationsverstärker 56 das Potenzial am invertierenden Eingang 64 dem Potenzial am nicht invertierenden Eingang 60 nachgeregelt, womit erreicht wird, dass das Potenzial des mit der Leitung An verbundenen zweiten Nachverstärkereingangs 52 auf das Potenzial am mit der Leitung Ap verbundenen ersten Nachverstärkereingang 50 nachgeregelt wird.

Da nun aber das Potenzial an den mit den Eingängen 50, 52 verbundenen Enden der beiden Leitungen Ap, An des Leitungsbusses 46 stets gleich ist, ist die Spannung über der zwischen den beiden Leitungen Ap, An vorgesehenen parasitären Kapazität 98 unabhängig von deren Größe stets gleich Null. Damit können über dieser parasitären Kapazität 98 keine Verschiebeströme mehr wirksam werden, was bedeutet, dass sich die betreffende parasitäre Kapazität in der Schaltung praktisch nicht mehr auswirkt. Es muss lediglich dafür gesorgt werden, dass die Stromlieferfähigkeit des Operationsverstärkers 56 hinreichend groß ist, was eine Frage der Dimensionierung ist. In der Praxis kann diese parasitäre Kapazität 98 beispielsweise Werte im Bereich von 12 pF bis 2,4 nF annehmen. Aufgrund der erfindungsgemäßen Schaltung ist diese parasitäre Kapazität nun aber unabhängig von deren Größe praktisch unwirksam.

Anders als bisher üblich erfolgt im vorliegenden Fall also keine Spannungsverstärkung mehr. Es liegt vielmehr eine stromverarbeitende Schaltung vor, die aus den Ausgangs- bzw. Differenzströmen an den Enden der Leitungen Ap, An des Leitungsbusses 46 eine Ausgangsspannung mit niederohmschem Innenwiderstand am Ausgang 90 des Operationsverstärkers 56 erzeugt und gleichzeitig die Spannung über der parasitären Kapazität 98 konstant bei Null hält, sodass eine größere Variation des Wertes dieses parasitären Kondensators praktisch keine Auswirkungen auf die Signalverarbeitung mehr hat.

Es wird also das Potenzial an den beiden mit den Leitungen Ap, An des Leistungsbusses 46 verbundenen Nachverstärkereingängen 50, 52 stets konstant gehalten. Da dies durch die hier beispielsweise über das Gegenkopplungsnetzwerk 92 erfolgende Gegenkopplung des Operationsverstärkers 96 erfolgt, tritt dennoch am Ausgang 90 des Operationsverstärkers 96 wieder ein Ausgangssignal 54 auf.

Das Potenzial an dem mit dem ersten Nachverstärkereingang 50 verbundenen Ende der Leitung Ap ist zwar festgelegt. Mit einem jeweiligen ankommenden Puls fließt jedoch Strom in den Eingang 50, über den Stromspiegel 68 und über dessen zweiten Stromzweig 70 wieder zum mit dem zweiten Eingang 52 verbundenen Ende der Leitung An hin und kollidiert dort mit dem Strom, der von dem über die Leitung An ankommenden Puls herrührt. Diese Kollision wird dann mittels des beispielsweise über das Gegenkopplungsnetzwerk 92 gegegekoppelten Operationsverstärkers 56 ausgeregelt, wobei das zur Differenz der in die beiden Nachverstärkereingänge 50, 52 fließenden Ströme proportionale Ausgangssignal 54 am Ausgang 90 des Operationsverstärkers 56 abgreifbar ist.

Die parasitäre Kapazität 98 kommt somit unabhängig von deren Größe nicht mehr zum Tragen, da auf beiden Seiten dieser parasitären Kapazität 98 ein gleiches Potenzial vorliegt.

Dadurch, dass nicht mehr im Spannungsbereich, sondern im Strombereich gearbeitet wird, wirken sich parasitäre Kapazitäten der beschalteten Transistoren zumindest wesentlich geringer aus, das heißt die Grenzfrequenz der Schaltung ist sehr viel höher als im Spannungsbereich. Mit vergleichsweise preisgünstigen Bauteilen kann somit eine hohe Bandbreite der gesamten Anordnung erreicht werden.

Mit einer sehr einfachen Anordnung kann bzgl. des Nachverstärkers die Funktionalität eines Instrumentierungsverstärkers erzielt werden, wofür bisher üblicherweise drei Operationsverstärker erforderlich waren. Mit dem erfindungsgemäßen Nachverstärker ist lediglich ein einziger Operationsverstärker erforderlich.

Die Schaltung liefert aus einem differenziell verstärkten Eingangssignal ein unipolares Ausgangssignal, das zur Weiterverarbeitung hergenommen werden kann.

### Bezugszeichenliste

- 10: Lichtgitter
- 12: Sender
- 14: Sendeelement
- 16: Empfänger
- 18: optoelektronisches Empfangselement
- 20: Empfangsschaltung
- 32: Versorgungsspannungsklemme
- 46: Leitungsbus
- 48: Nachverstärker
- 50: erster Nachverstärkereingang
- 52: zweiter Nachverstärkereingang
- 54: Ausgangssignal
- 56: Operationsverstärker
- 58: erste Transistorschaltung
- 60: nicht invertierender Eingang
- 62: zweite Transistorschaltung
- 64: invertierender Eingang
- 66: erster Stromzweig
- 68: Stromspiegel
- 70: zweiter Stromzweig
- 72: Transistor
- 74: Transistor
- 84: Spannungsteiler
- 86: Widerstand
- 88: Widerstand
- 90: Ausgang
- 92: Gegenkopplungsnetzwerk, Widerstand
- 94: Kondensator
- 96: Widerstand
- 98: parasitäre Kapazität

- Ap: Leitung
- An: Leitung
- O: Masse

## Patentansprüche

1. Lichtgitter mit
optoelektronischen Empfangselementen (18),
den Empfangselementen (18) zugeordneten Empfangsschaltungen (20) zur differenziellen Verstärkung der Empfangssignale, einem Leitungsbus (46) mit zwei Leitungen (Ap, An) und einem zwei Eingänge (50, 52) aufweisenden, über den Leitungsbus (46) mit den Empfangsschaltungen (20) verbundenen Nachverstärker (48) zur Erzeugung eines Ausgangssignals (54),
**dadurch gekennzeichnet,**
**dass** der Nachverstärker (48) so ausgeführt ist, dass er ein zur Differenz der aus den beiden Busleitungen (Ap, An) in die beiden Nachverstärkereingänge (50, 52) fließenden Ströme proportionales Ausgangssignal (54) erzeugt und die beiden jeweils mit einer Leitung (Ap, An) des Leitungsbusses (46) verbundenen Nachverstärkereingänge (50, 52) konstant auf einem gleichen vorgegebenen Potenzial hält.

2. Lichtgitter nach Anspruch 1,
**dadurch gekennzeichnet,**
**dass** der Nachverstärker (48) einen das Ausgangssignal (54) liefernden Operationsverstärker (56) umfasst.

3. Lichtgitter nach Anspruch 2,
**dadurch gekennzeichnet,**
**dass** der Operationsverstärker (56) als Transimpedanzverstärker oder stromrückgekoppelter Operationsverstärker ausgeführt ist.

4. Lichtgitter nach Anspruch 2 oder 3,
**dadurch gekennzeichnet,**
**dass** ein mit einer ersten (Ap) der beiden Busleitungen (Ap, An) verbundener erster Eingang (50) der beiden Nachverstärkereingänge (50, 52) über eine erste Transistorschaltung (58) und der nicht invertierende Eingang (60) des Operationsverstärkers (56) über eine zweite Transistorschaltung (62) konstant auf einem zumindest im Wesentlichen gleichen vorgegebenen Spannungspotenzial gehalten werden, auf das das Spannungspotenzial an dem mit der zweiten Busleitung (An) verbundenen zweiten Nachverstärkereingang (52) ausgeregelt wird.

5. Lichtgitter nach Anspruch 4,
**dadurch gekennzeichnet,**
**dass** der zweite Nachverstärkereingang (52) mit dem invertierenden Eingang (64) des Operationsverstärkers (56) und der invertierende Eingang (64) über ein Gegenkopplungsnetzwerk (92) mit dem Ausgang (54) des Operationsverstärkers (56) verbunden ist.

6. Lichtgitter nach einem der vorhergehenden Ansprüche,
**dadurch gekennzeichnet,**
**dass** der Nachverstärker (48) einen Stromspiegel (68) umfasst.

7. Lichtgitter nach Anspruch 6,
**dadurch gekennzeichnet,**
**dass** die erste Transistorschaltung (58) mit einem ersten Stromzweig (66) des Stromspiegels (68) in Reihe geschaltet ist, mit dessen zweitem Stromzweig (70) der zweite Nachverstärkereingang (52) und entsprechend der invertierende Eingang (64) des Operationsverstärkers (56) verbunden ist.

8. Lichtgitter nach einem der vorhergehenden Ansprüche,
**dadurch gekennzeichnet,**
**dass** die erste Transistorschaltung (58) einen Transistor (72) umfasst, dessen Basis- oder Gate-Anschluss auf einem festen Spannungspotenzial gehalten ist und dessen Emitter- bzw. Source-Anschluss direkt mit dem ersten Nachverstärkereingang verbunden ist, um diesen konstant auf dem vorgegebenen Spannungspotenzial zu halten.

9. Lichtgitter nach einem der vorhergehenden Ansprüche,
**dadurch gekennzeichnet,**
**dass** die zweite Transistorschaltung (62) einen Transistor (74) umfasst, dessen Basis- oder Gate-Anschluss direkt mit dem Basis- oder Gate-Anschluss des der ersten Transistorschaltung (58) zugeordneten Transistors (72) und dessen Emitter- bzw. Source-Anschluss direkt mit dem nicht invertierenden Eingang (60) des Operationsverstärkers (56) verbunden ist, so dass der nicht invertierende Eingang (60) des Operationsverstärkers (56) zumindest im Wesentlichen dasselbe vorgegebene Spannungspotenzial wie der erste Nachverstärkereingang (50) aufweist.

10. Lichtgitter nach einem der vorhergehenden Ansprüche,
**dadurch gekennzeichnet,**
**dass** der Basis- bzw. Gate-Anschluss des Transistors (72) der ersten Transistorschaltung (58) und der Basis- bzw. Gate-Anschluss des Transistors (74) der zweiten Transistorschaltung (62) über einen gemeinsamen, zwischen eine Versorgungsspannungsklemme (32) und Masse (0) geschalteten Spannungsteiler (84) auf dem festen Spannungspotenzial gehalten werden.

11. Lichtgitter nach einem der vorhergehenden Ansprüche,
**dadurch gekennzeichnet,**
**dass** das Gegenkopplungsnetzwerk aus einem ohmschen Widerstand (92) besteht.

12. Lichtgitter nach einem der vorhergehenden Ansprüche,
**dadurch gekennzeichnet,**
**dass** die Basis- bzw. Gate-Anschlüsse der Transistoren (72, 74) der beiden Transistorschaltungen (58, 62) wechselspannungsmäßig entkoppelt sind.

13. Lichtgitter nach Anspruch 12,
**dadurch gekennzeichnet,**
**dass** die wechselspannungsmäßige Entkopplung mittels eines Kondensators (94) erfolgt.

## Claims

1. A light grid having
optoelectronic receiving elements (18),
receiving circuits (20) associated with the receiving elements (18) for the differential amplification of the receiving signals,
a line bus (46) having two lines (Ap, An) and
a post amplifier (48) for the generation of an output signal (54) having two inputs (50, 52) connected to the receiving circuits (20) via the line bus (46)
**characterized in that**
the post amplifier (48) is configured such that it generates an output signal (54) proportional to the difference of the currents flowing from the two bus lines (Ap, An) into the two post amplifier inputs (50, 52) and maintains each of the two post amplifier inputs (50, 52) respectively connected to a line of the line bus (56) at a constant equal predefined potential.

2. A light grid in accordance with claim 1,
**characterized in that** the post amplifier (48) includes an operational amplifier (56) producing the output signal (54).

3. A light grid in accordance with claim 2,
**characterized in that** the operational amplifier (56) is realized as a transimpedance amplifier or a current coupled operational amplifier.

4. A light grid in accordance with claim 2 or claim 3,
**characterized in that** a first input (50) of the two post amplifier inputs (50, 52) is connected to a first (Ap) of the two bus lines (Ap, An) via a first transistor circuit (58) and the non-inverting input (60) of the operational amplifier (56), via a second transistor circuit (62), are constantly maintained at at least a substantially equal predefined voltage potential to which the voltage potential is regulated at the second post amplifier input (52) connected to the second bus line (An).

5. A light grid in accordance with claim 4,
**characterized in that** the second post amplifier input (52) is connected to the inverting input (64) of the operational amplifier (56) and the inverting input (64) is connected to the output (54) of the operational amplifier (56) via a feedback network (92).

6. A light grid in accordance with any one of the preceding claims,
**characterized in that** the post amplifier (48) includes a current mirror (68).

7. A light grid in accordance with claim 6,
**characterized in that** the first transistor circuit (58) is connected in series with a first current branch (66) of the current mirror (68) with whose second current branch (70) the second post amplifier input (52) and the inverting input (64) of the operational amplifier (56) is correspondingly connected.

8. A light grid in accordance with any one of the preceding claims,
**characterized in that** the first transistor circuit (58) includes a transistor (72) whose base connection or gate connection is maintained at a fixed voltage potential and whose emitter connection or source connection is directly connected to the first post amplifier input to constantly maintain this at a predefined voltage potential.

9. A light grid in accordance with any one of the preceding claims, **characterized in that** the second transistor circuit (62) includes a transistor (74) whose base connection or gate connection is directly connected to the base connection or gate connection of the transistor (72) associated with the first transistor circuit (58) and its emitter connection or source connection is directly connected to the non-inverting input (60) of the operational amplifier (56), so that the non-inverting input (60) of the operational amplifier (56) is at substantially the same predefined voltage potential as is present at the first post amplifier input (50).

10. A light grid in accordance with any one of the preceding claims, **characterized in that** the base connection or the gate connection of the transistor (72) of the first transistor circuit (58) and the base connection or the gate connection of the transistor (74) of the second transistor circuit (62) are maintained at a common fixed voltage potential by a voltage divider (84) connected between a supply voltage clamp (32) and ground (0).

11. A light grid in accordance with any one of the preceding claims, **characterized in that** the feedback network consists of an ohmic resistor (92).

12. A light grid in accordance with any one of the preceding claims, **characterized in that** the base connections or the gate connections of the transistors (72, 74) of the two transistor circuits (58, 62) are decoupled by means of an alternating current.

13. A light grid in accordance with claim 12,
**characterized in that** the decoupling by means of an alternating current is achieved by means of a capacitor (94).

## Revendications

1. Barrière lumineuse, comprenant
des éléments récepteurs optoélectroniques (18),
des circuits récepteurs (20), associés aux éléments récepteurs (18), pour une amplification différentielle des signaux reçus,
un bus de ligne (46) avec deux lignes (Ap, An), et
un post-amplificateur (48) comprenant deux entrées (50, 52) et relié au circuit récepteur (20) via le bus de ligne (46), pour générer un signal de sortie (54),
**caractérisée en ce que**
le post-amplificateur (48) est réalisé de telle façon qu'il génère un signal de sortie (54) proportionnel à la différence des courants provenant des de ligne de bus (Ap, An) vers les deux entrées (50, 52) du post-amplificateur et maintient les deux entrées (50, 52) du post-amplificateur, reliées chacune à une ligne (Ap, An) du bus de ligne (46), de façon constante à un potentiel égal prédéterminé.

2. Barrière lumineuse selon la revendication 1,
**caractérisée en ce que** le post-amplificateur (48) comprend un amplificateur opérationnel (56) qui fournit le signal de sortie (54).

3. Barrière lumineuse selon la revendication 2,
**caractérisée en ce que** l'amplificateur opérationnel (56) est réalisé sous forme d'amplificateur à trans-impédance ou d'amplificateur opérationnel à bouclage de courant.

4. Barrière lumineuse selon la revendication 2 ou 3,
**caractérisée en ce que**, via un premier circuit à transistor (58), une première entrée (50), connectée à une première (Ap) des deux lignes de bus (Ap, An), des deux entrées (50, 52) du post-amplificateur, et via le second circuit à transistor (62), l'entrée non inversée (60) de l'amplificateur opérationnel (56), sont maintenues de façon constante à un potentiel de tension prédéterminé au moins sensiblement égal, potentiel auquel le potentiel de tension régnant à la seconde entrée (52) du post-amplificateur reliée à la seconde ligne de bus (An) est régulé.

5. Barrière lumineuse selon la revendication 4,
**caractérisée en ce que** la seconde entrée (52) du post-amplificateur est reliée à l'entrée inversée (64) de l'amplificateur opérationnel (56), et l'entrée inversée (64) est reliée à la sortie (54) de l'amplificateur opérationnel (56) via un réseau de contre-couplage (92).

6. Barrière lumineuse selon l'une des revendications précédentes,
**caractérisée en ce que** le post-amplificateur (48) comprend un miroir de courant (68).

7. Barrière lumineuse selon la revendication 6,
**caractérisée en ce que** le premier circuit à transistor (58) est branché en série avec une première ramification (66) du miroir de courant (68), et la seconde entrée (52) du post-amplificateur ainsi que, de façon correspondante, l'entrée inversée (64) de l'amplificateur opérationnel, est reliée à la seconde ramification (70) de celui-ci.

8. Barrière lumineuse selon l'une des revendications précédentes,
**caractérisée en ce que** le premier circuit à transistor (58) comprend un transistor (72) dont la borne de base ou de grille est maintenue à un potentiel de tension fixe, et dont la borne émettrice ou borne source est reliée directement à la première entrée du post-amplificateur, afin de maintenir celle-ci de façon constante au potentiel de tension prédéterminé.

9. Barrière lumineuse selon l'une des revendications précédentes,
**caractérisée en ce que** le second circuit à transistor (62) comprend un transistor (74) dont la borne de base ou de grille est reliée directement à la borne de base ou de grille du transistor (72) associé au premier circuit à transistor (58), et dont la borne émettrice ou borne source est reliée directement à l'entrée non inversée (60) de l'amplificateur opérationnel (56), de sorte que l'entrée non inversée (60) de l'amplificateur opérationnel (56) présente au moins sensiblement le même potentiel de tension prédéterminé que la première entrée (50) du post-amplificateur.

10. Barrière lumineuse selon l'une des revendications précédentes,
**caractérisée en ce que** la borne de base ou de grille du transistor (72) du premier circuit à transistor (58), et la borne de base ou de grille du transistor (74) du second circuit à transistor (62) sont maintenues au potentiel de tension fixe via un répartiteur de tension (84) commun branché entre une borne de tension d'alimentation (32) et la masse (O).

11. Barrière lumineuse selon l'une des revendications précédentes,
**caractérisée en ce que** le réseau de contre-couplage est une résistance ohmique (92).

12. Barrière lumineuse selon l'une des revendications précédentes,
**caractérisée en ce que** les bornes de base ou de grille (72, 74) des deux circuits à transistor (58, 62) sont découplées vis-à-vis des tensions alternatives.

13. Barrière lumineuse selon la revendication 12,
**caractérisée en ce que** le découplage vis-à-vis des tensions alternatives a lieu au moyen d'un condensateur (94).
